# EUROPÄISCHE PATENTSCHRIFT

(11) **EP 0 511 156 B1**
(45) Veröffentlichungstag und Bekanntmachung des Hinweises auf die Patenterteilung: **09.07.1997**
(21) Anmeldenummer: 92810195.5
(22) Anmeldetag: 18.03.1992
(51) Int. Cl.: C07F 9/145, C08K 5/526, C07F 9/59, C07F 9/146, C08K 5/529

(54) **Unsymmetrische Aryl-phosphite**
Non symmetric aryl phosphites
Aryl phosphites non-symétriques

(30) Priorität: 26.03.1991 CH 913/91
(43) Veröffentlichungstag der Anmeldung: 28.10.1992
(73) Patentinhaber: Ciba Specialty Chemicals Holding Inc., 4057 Basel (CH)
(72) Erfinder: Pitteloud, Rita, Dr., CH-1724 Praroman (CH); Hofmann, Peter, Dr., CH-4059 Basel (CH); Maul, Rudolf, Dr., W-6143 Lorsch/Hessen (DE); Schenk, Volker, Dr., W-6140 Bensheim 6 (DE); Troxler, Eduard, Dr., CH-4052 Basel (CH); Zinke, Horst, Dr., W-6101 Reichelsheim/Odw. (DE)

(56) Entgegenhaltungen:
- US-A- 4 584 146
- US-A- 4 739 000
- CHEMICAL ABSTRACTS, vol. 92, no. 10, 10. M rz 1980, Columbus, Ohio, US; abstract no. 77427, Seite 36
- CHEMICAL ABSTRACTS, vol. 91, no. 12, 17. September 1979, Columbus, Ohio, US; abstract no. 92485, Seite 38
- CHEMICAL ABSTRACTS, vol. 91, no. 8, 20. August 1979, Columbus, Ohio, US; abstract no. 58133, Seite 44

## Beschreibung

Die Erfindung betrifft neue Phosphite, deren Verwendung als Stabilisatoren, ein neues Phosphorchloridit als Zwischenprodukt, sowie Zusammensetzungen enthaltend die genannten Phosphite.

Aus einer Reihe von Patentanmeldungen, wie z.B. den japanischen Patentanmeldungen JP-A-54 039 455, JP-A-54 036 363, JP-A-54 055 043, JP-A-62 086 036 sind hauptsächlich symmetrische substituierte Triarylphosphite als Stabilisatoren bekannt, wobei in der JP-A-54 041 948 solche Phosphite zusammen mit anderen Stabilisatoren in synthetischen Harzzusammensetzungen verwendet werden. Konkret ist dort unter anderem das Tris(2,4-di-tert-butyl-6-methylphenyl)phosphit beschrieben.
Phosphite mit mindestens einem Aryl-Rest sind aus JP-A-55 005 927, JP-A-54 163 938, US-A-4,348,308 und US-A-3,558,554 bekannt. In der US-A-3,558,554 handelt es sich bei dem Aryl-Rest bevorzugt um mit tert-Butyl substituiertes p-Cresyl. Aus der US-A-4,348,308 kennt man beispielsweise Verbindungen wie Bis(2,4-di-tert-butylphenyl)-cyclohexylphosphit oder Bis(2-tert-butylphenyl)-isodecylphosphit.
In der US-A-4,444,929 werden Verbindungen wie z.B. Bis(2-tert-butyl-4-methylphenyl)-2,6-di-tert-butyl-4-methylphenylphosphit in Stabilisatormischungen eingesetzt. Analoga des Zwischenproduktes zur Herstellung der erfindungsgemässen Verbindungen sind in der Literatur vorbekannt. So ist in der US-A-4,584,146 und US-A-4,444,929 Bis(2,6-di-tert-butyl-4-methylphenyl)-phosphorchloridit als Zwischenprodukt bei der Herstellung von Phosphiten offenbart. In der US-A-4,233,208 werden Bis(2,6-di-tert-butyl-4-methylphenyl)-phosphorchloridit und ähnliche Chloride und Hydroxide als Stabilisatoren verwendet.

Es besteht weiterhin ein Bedarf an wirksamen Stabilisatoren für organische Materialien, die gegen lichtinduzierten und/oder thermooxidativen Abbau empfindlich sind.

Gegenstand der Erfindung sind Verbindungen der Formel I 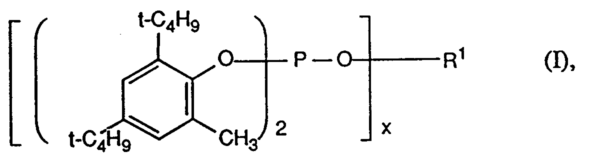 worin x 1 ist,
R¹ für C₁-C₃₀-Alkyl, mit Halogen, -COOR², -CN, -NR³R⁴ oder -CONR³R⁴ substituiertes C₁-C₁₈-Alkyl, durch -NR⁵-, -O- oder -S- unterbrochenes C₂-C₁₈-Alkyl, C₃-C₁₈-Alkenyl, C₅-C₁₂-Cycloalkyl, Phenyl-C₁-C₄-alkyl, Phenyl, Naphthyl, einen Rest der Formel 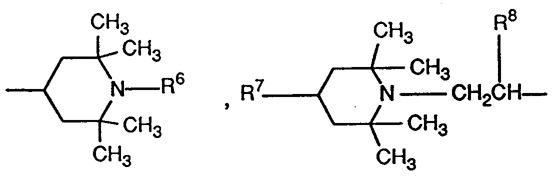 oder 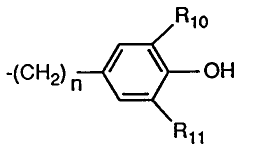 steht,
R₂, R₃, R₄ und R₅ unabhängig voneinander Wasserstoff, C₁-C₁₈-Alkyl, C₅-C₁₂-Cycloalkyl oder Phenyl-C₁-C₄-Alkyl bedeuten,
R⁶ Wasserstoff, Methyl, Alkyl der Benzyl ist,
R⁷ Wasserstoff oder -OR⁹ bedeutet,
R⁸ Wasserstoff oder Methyl ist,
R⁹ für Wasserstoff oder C₁-C₃₀-Alkyl steht,
R¹⁰ und R¹¹ unabhängig voneinander Wasserstoff oder C₁-C₈-Alkyl bedeuten und
n für 3-6 steht.

R¹ als C₁-C₃₀-Alkyl kann linear oder verzweigt sein und bedeutet beispielsweise Methyl, Ethyl, Isomere von Propyl, Butyl, Pentyl, Hexyl, Heptyl, Octyl, Nonyl, Decyl, Dodecyl, Tetradecyl, Heptadecyl, Octadecyl, Icosyl, Tetracosyl oder Triacontyl. Insbesondere bedeutet R¹ als Alkyl C₁-C₂₄-Alkyl, ganz besonders C₁-C₁₈-Alkyl, bevorzugt C₁-C₁₂-Alkyl, z.B. C₁-C₄-Alkyl.
R², R³, R⁴ und R⁵ als C₁-C₁₈-Alkyl können linear oder verzweigt sein und haben z.B. die für R¹ als C₁-C₃₀-Alkyl angegebenen Bedeutungen bis zur entsprechenden Anzahl der C-Atome. Bevorzugt ist dabei C₁-C₁₂-, insbesondere C₁-C₄-Alkyl.
R¹ als mit Halogen substituiertes C₁-C₁₈-Alkyl kann linear oder verzweigt sein und ein- oder mehrfach, z.B. ein bis 3-fach, insbesondere ein- oder zweifach substituiert sein und bedeutet z.B. Chlormethyl, Dichlormethyl, Trichlormethyl, Chlorethyl, Dichlorethyl, Chlorpropyl, Fluormethyl, Trifluormethyl, Trifluorethyl, Trifluorpropyl usw.

R₁ als mit -COOR² substituiertes C₁-C₁₈-Alkyl bedeutet beispielsweise mit Methoxycarbonyl, Ethoxycarbonyl, Isomeren von Propoxycarbonyl, Butoxycarbonyl, Pentoxycarbonyl, Hexyloxycarbonyl, Heptyloxycarbonyl, Ethylhexyloxycarbonyl, Decyloxycarbonyl, Dodecyloxycarbonyl, Cyclohexyloxycarbonyl, Tolyloxycarbonyl, insbesondere Methoxy- und Ethoxycarbonyl, substituiertes Methyl, Ethyl, Propyl, Butyl, Pentyl, Hexyl, Heptyl, Octyl, Nonyl, Decyl, Dodecyl oder Octadecyl, bevorzugt mit Methoxycarbonyl, Ethoxycarbonyl oder insbesondere Butoxycarbonyl substituiertes Methyl und Ethyl, insbesondere Methyl.

R₁ als mit -CONR³R⁴ substituiertes C₁-C₁₈-Alkyl steht z.B. für mit Dimethylaminocarbonyl, Diethylaminocarbonyl, Dibutylaminocarbonyl oder Ethylmethylaminocarbonyl, insbesondere Dimethyl- und Diethylaminocarbonyl substituiertes Methyl, Ethyl, Propyl, Butyl, Pentyl, Hexyl, Heptyl, Octyl, Nonyl, Decyl, Dodecyl oder Octadecyl, bevorzugt mit Dimethylaminocarbonyl oder Diethylaminocarbonyl substituiertes Methyl, Ethyl und Propyl, insbesondere mit Dimethylaminocarbonyl substituiertes Propyl.

R₁ als mit -CN substituiertes C₁-C₁₈-Alkyl bedeutet beispielsweise Cyanomethyl, Cyanoethyl, Cyanopropyl, Cyanobutyl, Cyanopentyl, Cyanohexyl, Cyanooctyl, Cyanodecyl, Cyanododecyl oder Cyanooctadecyl, insbesondere Cyanoethyl.

Ist R¹ als C₂-C₁₈-Alkyl durch -O-, -S- oder -NR⁵-Einheiten unterbrochen, so finden sich darin z.B. die Struktureinheiten -CH₂-CH₂-O-, -CH₂-CH₂-S- oder -CH₂-CH₂-NR⁵-. Die Gruppen -NR⁵-, -O- bzw. -S- können dabei ein- oder mehrmals in der Kette vorkommen. Andere Beispiele für R¹ als durch -O-, -S- oder -NR⁵-Einheiten unterbrochenes C₂-C₁₈-Alkyl sind mit Methoxy, Ethoxy, Propyloxy, Butoxy, Methylthio, Ethylthio, Propylthio, Butylthio, Dimethylamino, Diethylamino, Dipropylamino usw., insbesondere Methoxy und Ethoxy substituiertes Methyl, Ethyl, Propyl, Butyl, Pentyl, Hexyl, Heptyl, Octyl, Nonyl, Decyl, Dodecyl oder Octadecyl, bevorzugt mit Methoxy substituiertes Ethyl.

R¹, R², R³, R⁴ und R⁵ als C₅-C₁₂-Cycloalkyl können z.B. Cyclopentyl, Cyclohexyl, Cycloheptyl, Cyclooctyl, Cyclodecyl oder Cyclododecyl, bevorzugt Cyclopentyl und Cyclohexyl, besonders Cyclohexyl, bedeuten.

R¹, R², R³, R⁴ und R⁵ als Phenyl-C₁-C₄-Alkyl sind z.B. Benzyl, 1-Phenylethyl, 2-Phenylethyl, 3-Phenylpropyl, α-Methylbenzyl, α,α-Dimethylbenzyl usw., bevorzugt Benzyl und 1-Phenylethyl.

R¹ als aromatischer Rest ist vorzugsweise Phenyl.

Halogen bedeutet insbesondere Chlor, Brom oder Fluor.

Von besonderem Interesse sind Verbindungen der Formel I, worin R¹ für C₁-C₃₀-Alkyl, mit Halogen, -COOR², -CN, -NR³R⁴ oder -CONR³R⁴ substituiertes C₁-C₁₈-Alkyl, durch -NR⁵-, -O- oder -S- unterbrochenes C₂-C₁₈-Alkyl, C₃-C₁₈-Alkenyl, C₅-C₁₂-Cycloalkyl, Phenyl-C₁-C₄-alkyl, Phenyl, Naphthyl, einen Rest der Formel 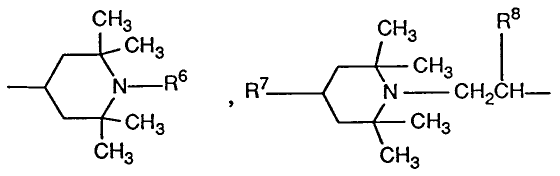 oder 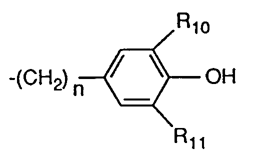 steht.

Andere besonders interessante Verbindungen der Formel I sind solche, worin R¹ für C₁-C₂₄-Alkyl, mit Halogen, -COOR², -CN, -NR³R⁴ oder -CONR³R⁴ substituiertes C₁-C₁₂-Alkyl, durch -NR⁵-, -O- oder -S- unterbrochenes C₂-C₁₈-Alkyl, C₃-C₁₈-Alkenyl, C₅-C₁₂-Cycloalkyl, Phenyl-C₁-C₄-alkyl, Phenyl, Naphthyl, einen Rest der Formel 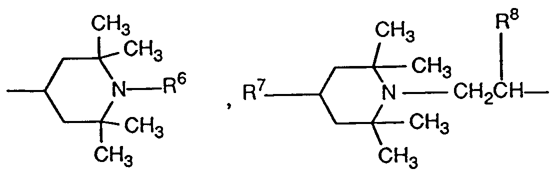 oder 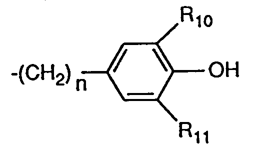 steht.

Bevorzugte Verbindungen sind Verbindungen der Formel I, worin R¹ für C₁-C₂₀-Alkyl, mit Halogen, -COOR², -CN oder -NR³R⁴ substituiertes C₁-C₈-Alkyl, durch -O- oder -S- unterbrochenes C₂-C₈-Alkyl, C₃-C₈-Alkenyl, C₅-C₈-Cycloalkyl, unsubstituiertes oder mit C₁-C₁₂-Alkyl oder Phenyl-C₁-C₄-alkyl substituiertes Phenyl, Naphthyl, einen Rest der Formel 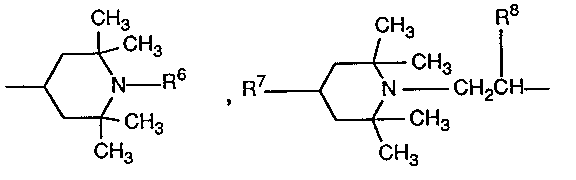 oder 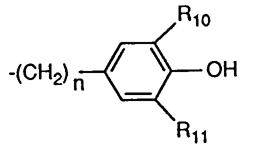 steht,
R⁶ Wasserstoff oder Methyl ist,
R⁸ und R⁹ Wasserstoff darstellen.

Weiterhin interessante Verbindungen der Formel I sind solche, worin R¹ unsubstituiertes oder mit Halogen, -COOR², -CN oder -NR³R⁴ substituiertes C₁-C₁₈-Alkyl, durch -NR⁵-, -O- oder -S- unterbrochenes C₂-C₁₈-Alkyl, C₃-C₆-Alkenyl, C₅-C₈-Cycloalkyl, Phenyl-C₁-C₄-alkyl, einen Rest der Formel 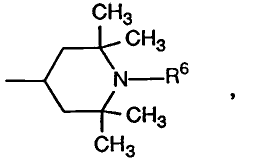 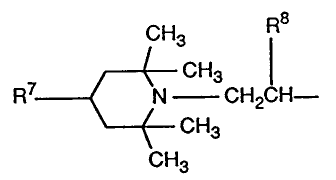 oder 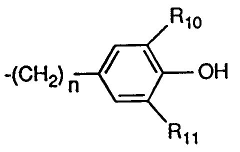 steht.

Bevorzugt sind Verbindungen der Formel I, worin R¹ unsubstituiertes oder mit Halogen, -COOR², -CN oder -NR³R⁴ substituiertes C₁-C₁₂-Alkyl, durch -NR⁵-, -O- oder -S- unterbrochenes C₂-C₁₂-Alkyl, Phenyl-C₁-C₄-alkyl oder C₅-C₇-Cycloalkyl bedeutet.

Bevorzugte Verbindungen sind weiterhin Verbindungen der Formel I, worin R¹ C₁-C₄-Alkyl bedeutet.

Hervorzuheben sind auch jene Verbindungen der Formel I, worin R¹ die oben angegebenen Bedeutungsmöglichkeiten besitzt, aber nicht für Phenyl oder Naphtyl steht.

Besonders erwähnenswert sind auch jene Verbindungen der Formel I, worin R¹ C₁-C₁₈-Alkyl, C₅-C₇-Cycloalkyl oder Phenyl-C₁-C₄-Alkyl, vor allem C₁-C₁₈-Alkyl bedeutet.

Die Verbindungen der Formel I können durch in der Chemie an sich bekannte Verfahren erhalten werden. In der DE-A-29 50 694 wird ein Verfahren zur Herstellung von entsprechenden Verbindungen durch Umsetzung eines Phosphortrihalogenids, Phosphorigsäuremonoesterdihalogenids oder eines Phosphorigsäurediesterhalogenids mit einem Phenol in Gegenwart eines Alkali- oder Erdalkalihydroxides beschrieben.
Die erfindungsgemässen Verbindungen lassen sich dementsprechend durch Substitution des Chlors im Diarylphosphorchloridit mit Alkoholen bzw. Phenolen in Gegenwart einer Base herstellen. 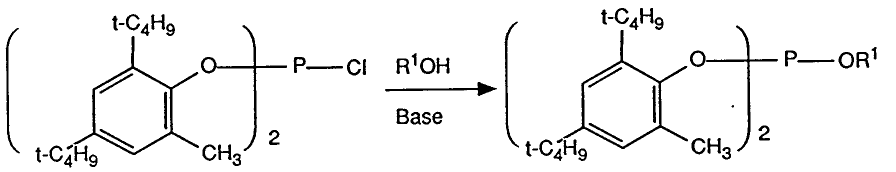
R¹ hat die zuvor angegebene Bedeutung.

Als Basen können organische Basen oder anorganische Basen verwendet werden. Als organische Basen sind z. B. tertiäre Amine wie z.B. Trimethylamin, Triethylamin, N,N-Dimethylanilin oder N,N-Diethylanilin oder Pyridin zu nennen. Als anorganische Basen kommen beispielsweise Alkalihydroxide, etwa Natriumhydroxid oder Kaliumhydroxid oder Alkalicarbonate, etwa Natrium- oder Kaliumcarbonat in Frage.
Die Reaktionstemperaturen der Substitution liegen z.B. zwischen -30 °C und +150 °C, vorzugsweise zwischen -10 °C und +70 °C.
Als Lösungsmittel können aliphatische und aromatische, gegebenenfalls halogenierte, Kohlenwasserstoffe oder Ether eingesetzt werden. Geeignete aromatische Kohlenwasserstoffe sind z.B. Benzol, Toluol, Xylol oder als chlorierter aromatischer Kohlenwasserstoff beispielsweise Chlorbenzol. Aliphatische Kohlenwasserstoffe, die als Lösungsmittel verwendet werden können, sind beispielsweise Hexan, Pentan oder weitere Petroletherfraktionen. Als halogenierte aliphatische Kohlenwasserstoffe eignen sich z.B. Methylenchlorid oder Chloroform. Als Ether kommen z.B. Diethylether, Dibutylether oder Tetrahydrofuran in Frage.
Das Diarylphosphorchloridit (II) und der Alkohol R¹OH werden zweckmässig in äquivalenten Mengen eingesetzt. Es ist aber z.B. auch möglich, einen Ueberschuss an Alkohol einzusetzen, beispielsweise 1,05-1,2 Aequivalente.

Eine weitere Möglichkeit zur Herstellung von erfindungsgemässen Verbindungen ist die Kondensation von 2 Aequivalenten 2,4-Di-tert-butyl-6-methylphenol mit einem Aeqiuvalent einer Phosphorverbindung R¹O-PCl₂ in Gegenwart einer organischen Base.

Gegenstand der Erfindung ist auch die Verbindung der Formel II 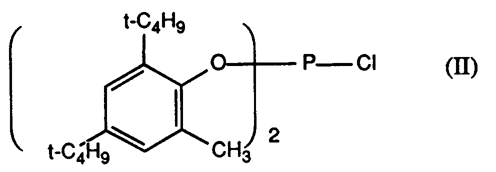 und deren Verwendung zur Herstellung von Verbindungen der Formel I.

Die Herstellung von Phosphorchloriditen ist dem Fachmann bekannt und in zahlreichen Veröffentlichungen beschrieben. Das neue Phosphorchloridit der Formel II kann nach analogen Verfahren hergestellt werden.
So beschreiben H. G. Cook et al. im J. Chem. Soc. 1949, IV, 2921-2927 und A. J. Razumov et al. in Chemical Abstracts 60, 1571g (1964) die Herstellung entsprechender Chloride durch Umsetzung von Phosphortrichlorid mit Alkanolen in Gegenwart von N,N-Dimethylanilin oder N,N-Diethylanilin als Säureakzeptor. J. Michalski et al. veröffentlichen im J. Chem. Soc. 1961, 4904 eine Variante dieses Verfahrens, worin als Säureakzeptor ein Pyridin/Diethylanilin-Gemisch eingesetzt wird. Umsetzungen von Phosphortrichlorid mit gehinderten Phenolen sind aus den US-A-3,281,506 und US-A-4,584,146 bekannt.
H. G. Cook et al. zeigen im J. Chem. Soc. 1949, IV, 2921-2927 eine weitere Methode zur Herstellung von zur Formel II analogen Phosphorchloriditen. Sie setzen Phosphortrichlorid mit symmetrischen Trialkylphosphiten um. Eine Variante dieses Verfahrens ist im US-A-4,079,103 beschrieben.

Die Herstellung von Bis(2,4-di-tert-butyl-6-methyl)-phosphorchloridit kann auch ohne Lösungsmittel direkt in der Schmelze erfolgen. Dies ermöglicht die Herstellung der Phosphite der Formel I ohne Isolierung der Zwischenstufe.

Die Verbindungen der Formel I eignen sich hervorragend zum Stabilisieren von organischen Materialien gegen lichtinduzierten, thermischen oder/und oxidativen Abbau. Gegenstand der Erfindung sind daher auch Zusammensetzungen enthaltend ein gegen solche Abbaureaktionen empfindliches organisches Material und mindestens eine Verbindung der Formel I bzw. die Verwendung von Verbindungen der Formel I als Stabilisatoren für organische Materialien gegen die genannten Abbauarten. Beispiele für solche Materialien sind:
1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vemetzt sein kann), z.B. Polyethylen hoher Dichte (HDPE), Polyethylen niederer Dichte (LDPE), lineares Polyethylen niederer Dichte (LLDPE).
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen--Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen-/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.
3a. Kohlenwasserstoffharze (z.B. C₅-C₉) inklusive hydrierte Modifikationen davon (z.B. Klebrigmacherharze).
4. Polystyrol, Poly-(p-methylstyrol), Poly-(α-methylstyrol).
5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol oder a-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.
7. Halogenhaltige Polymere, wie z.B. Polychloropren, Chlorkautschuk, chloriertes oder chlorsulfoniertes Polyethylen, Copolymere von Ethylen und chloriertem Ethylen, Epi-chlorhydrinhomo-und -copolymere, insbesondere Polymere aus halogenhaltigen Vinylverbindungen, wie z.B. Polyvinylchlorid, Polyvinylidenchlorid, Polyvinylfluorid, Poly-vinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, Polyacrylamide und Polyacrylnitrile.
9. Copolymere der unter 8) genannten Monomeren untereinander oder mit anderen ungesättigten Monomeren, wie z.B. Acrylnitril-Butadien-Copolymere, Acrylnitril-Alkyl-acrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, -stearat, - benzoat, -maleat, Polyvinylbutyral, Polyallylphthalat, Polyallylmelamin; sowie deren Copolymere mit in Punkt 1 genannten Olefinen.
11. Homo- und Copolymere von cyclischen Ethern, wie Polyalkylenglykole, Polyethylenoxyd, Polypropylenoxyd oder deren Copolymere mit Bisglycidylethern.
12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
13. Polyphenylenoxide und -sulfide und deren Mischungen mit Styrolpolymeren oder Polyamiden.
14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamid-systeme").
16. Polyharnstoffe, Polyimide, Polyamid-imide und Polybenzimidazole.
17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
18. Polycarbonate und Polyestercarbonate.
19. Polysulfone, Polyethersulfone und Polyetherketone.
20. Vernetzte Polymere, die sich von Aldehyden einerseits und Phenolen, Harnstoff oder Melamin ändererseits ableiten, wie Phenol-Formaldehyd-, Harnstoff-Formaldehyd- und Melamin-Formaldehydharze.
21. Trocknende und nicht-trocknende Alkydharze.
22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
23. Vernetzbare Acrylharze, die sich von substituierten Acrylsäureestem ableiten, wie z.B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z.B. von Bis-glycidylethern oder von cycloaliphatischen Diepoxiden.
26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.
28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.
29. Wässrige Emulsionen natürlicher oder synthetischer Kautschuke, wie z.B. Naturkautschuk-Latex oder Latices von carboxylierten Styrol-Butadien-Copolymeren.

Vorzugsweise handelt es sich bei den zu schützenden organischen Materialien um natürliche, halbsynthetische oder bevorzugt synthetische organische Materialien. Besonders bevorzugt sind thermoplastische Polymere, insbesondere PVC oder Polyolefine, beispielsweise Polyethylen und Polypropylen (PP).
In den erfindungsgemässen Zusammensetzungen sind die Verbindungen der Formel I zweckmässig zu 0.01 bis 10, beispielsweise zu 0.05 bis 5, vorzugsweise zu 0.05 bis 3, insbesondere jedoch zu 0.1 bis 2 Gew.-% enthalten. Es kann sich dabei um eine oder mehrere der Verbindungen der Formel I handeln, und die Gewichtsprozentangaben beziehen sich auf die gesamte Menge dieser Verbindungen. Berechnungsgrundlage ist dabei das Gesamtgewicht des organischen Materials ohne die Verbindungen der Formel I.
Die Einarbeitung in die Materialien kann beispielsweise durch Einmischen oder Aufbringen der Verbindungen der Formel I und gegebenenfalls weiterer Additive nach den in der Technik üblichen Methoden erfolgen. Handelt es sich um Polymere, insbesondere synthetische Polymere, kann die Einarbeitung vor oder während der Formgebung, oder durch Aufbringen der gelösten oder dispergierten Verbindungen auf das Polymere, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der Verbindungen der Formel I in Polymere besteht in deren Zugabe vor, während oder unmittelbar nach der Polymerisation der entsprechenden Monomeren bzw. vor der Vernetzung. Die Verbindungen der Formel I können dabei als solche, aber auch in encapsulierter Form (z.B in Wachsen, Ölen oder Polymeren) zugesetzt werden. Im Falle der Zugabe vor oder während der Polymerisation können die Verbindungen der Formel I auch als Regulatoren für die Kettenlänge der Polymeren (Kettenabbrecher) wirken.

Die Verbindungen der Formel I oder Mischungen davon können auch in Form eines Masterbatches, der diese Verbindungen beispielsweise in einer Konzentration von 2,5 bis 25 Gew.-% enthält, den zu stabilisierenden Kunststoffen zugesetzt werden.

Zweckmässig kann die Einarbeitung der Verbindungen der Formel I nach folgenden Methoden erfolgen:
- als Emulsion oder Dispersion (z.B. zu Latices oder Emulsionspolymeren)
- Als Trockenmischung während des Vermischens von Zusatzkomponenten oder Polymermischungen
- durch direktes Zugeben in die Verarbeitungsapparatur (z.B. Extruder, Innenmischer usw.)
- als Lösung oder Schmelze.

Erfindungsgemässe Polymerzusammensetzungen können in verschiedener Form angewendet bzw. zu verschiedenen Produkten verarbeitet werden, z.B. als (zu) Folien, Fasern, Bändchen, Formmassen, Profilen, oder als Bindemittel für Lacke, Klebstoffe oder Kitte.

Wie bereits erwähnt, handelt es sich bei den zu schützenden organischen Materialien um organische, vorzugsweise synthetische, Polymere. Besonders vorteilhaft werden dabei thermoplastische Materialien geschützt, insbesondere Polyolefine. Vor allem ist dabei die ausgezeichnete Wirksamkeit der Verbindungen der Formel I als Verarbeitungsstabilisatoren (Hitzestabilisatoren) hervorzuheben. Zu diesem Zweck werden sie vorteilhaft vor oder während der Verarbeitung des Polymeren diesem zugesetzt.
Aber auch weitere Polymere (z.B. Elastomere) oder Schmierstoffe bzw. Hydraulikflüssigkeiten können gegen Abbau, z.B. lichtinduzierten oder/und thermooxidativen Abbau stabilisiert werden. Elastomere sind der obigen Aufzählung von möglichen organischen Materialien zu entnehmen.

Die in Frage kommenden Schmierstoffe und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Die Erfindung betrifft auch ein Verfahren zum Schützen von organischem Material gegen oxidativen, thermischen und/oder actinischen Abbau, dadurch gekennzeichnet, dass man diesem Material als Stabilisatoren Verbindungen der Formel I zusetzt bzw. auf dieses aufbringt,

Zusätzlich zu den erfindungsgemässen Verbindungen können die erfindungsgemässen Zusammensetzungen, insbesondere wenn sie organische, vorzugsweise synthetische, Polymere enthalten, noch weitere übliche Additive enthalten. Beispiele für solche Additive sind:
1. Antioxidantien
   1.1. Alkylierte Monophenole, z.B. 2,6-Di-tert.butyl-4-methylphenol, 2-Tert.butyl-4,6-di-methylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
   1.2. Alkylierte Hydrochinone, z.B. 2,6-Di-tert.butyl-4-methoxyphenol, 2,5-Di-tert.butylhydrochinon, 2,5-Di-tert.amyl-hydrochinon, 2,6-Diphenyl-4-octadecyloxyphenol.
   1.3. Hydroxylierte Thiodiphenylether, z.B. 2,2′-Thio-bis-(6-tert.-butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).
   1.4. Alkyliden-Bisphenole, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methyl-cyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)4-nonylphenol], 2,2′-Methylen-bis-[6-(α,α-dimethylbenzyl-)-4-nonylphenol], 4,4′-Methylen-bis-(2,6-di-tert.-butylphenol), 4,4′-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3′-tert.-butyl-4′-hydroxyphenyl)-butyrat], Bis-(3-tert.butyl-4-hydroxy-5-methyl-phenyl)-dicyclopentadien, Bis-[2-(3′-tert.butyl-2′-hydroxy-5′-methyl-benzyl)-6-tert.Butyl-4-methyl-phenyl]-terephthalat.
   1.5 Benzylverbindungen, z.B. 1,3,5-Tris-(3,5-di-tert.butyl-4-hydroxy-benzyl)-2,4,6-tri-methylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.
   1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino )-s-triazin, N-(3,5-di-tert.-butyl-4-hydroxyphenyl)-carbaminsäureoctylester.
   1.7. Ester der β-(3,5-Di-tert.butyl-4-hydroxyphenyl)-propionsäure mit ein-oder mehrwertigen Alkoholen, wie z.B. mit Methanol, Octa- decanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.
   1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.
   1.9. Ester der β-(3,5-Dicyclohexyl-4-hydroxyphenyl)-propionsäure mit ein-oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.
   1.10. Amide der β-(3,5-Di-tert.butyl-4-hydroxyphenyl)-propionsäure, wie z.B. N,N′-Bis-(3,5-di-tert.butyl-4-hydroxyphenylpropionyl)-hexamethylendiamin, N,N′-Bis-(3,5-di-tert.-butyl-4-hydroxyphenylpropionyl)-trimethylendiamin, N,N′-Bis-(3,5-di-tert.butyl-4-hydroxyphenylpropionyl)-hydrazin.
2. UV-Absorber und Lichtschutzmittel
   2.1. 2-(2′-Hydroxyphenyl)-benztriazole, wie z.B. das 5′-Methyl-, 3′,5′-Di-tert.butyl-, 5′-tert.Butyl-, 5′-(1,1,3,3-Tetramethylbutyl)-, 5-Chlor-3′,5′-di-tert.butyl-, 5-Chlor-3′-tert.-butyl-5′-methyl-, 3′-sec.Butyl-5′-tert.butyl, 4′-Octoxy-, 3′,5′-Di-tert.amyl-, 3′,5′-Bis-(α,α-dimethylbenzyl)-Derivat.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2′,4′-Trihydroxy-, 2′-Hydroxy-4,4′-dimethoxy-Derivat.
   2.3. Ester von gegebenenfalls substituierten Benzoesäuren, wie z.B. 4-tert.Butyl-phenyl-salicylat, Phenylsalicylat, Octylphenyl-salicylat, Dibenzoylresorcin, Bis-(4-tert.butyl-benzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester.
   2.4. Acrylate, wie z.B. α-Cyan-β,β-diphenylacrylsäure-ethylester bzw. - isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2′-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzyl-phosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N′-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1′-(1,2-Ethandiyl)-bis-(3,3,5,5-tetramethyl-piperazinon).
   2.7. Oxalsäurediamide, wie z.B. 4,4′-Di-octyloxy-oxanilid, 2,2′-Di-octyloxy-5,5′-di-tert.-Butyl-oxanilid, 2,2′-Di-dodecyloxy-5,5′di-tert.butyl-oxanilid, 2-Ethoxy-2′-ethyl-oxanilid, N,N′-Bis-(3-dimethylaminopropyl)-oxalamid, 2-Ethoxy-5-tert.butyl-2′-ethyloxanilid und dessen Gemisch mit 2-Ethoxy-2′-ethyl-5,4′-di-tert.butyl-oxanilid, Gemische von o-und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.
3. Metalldesaktivatoren, wie z.B. N,N′-Diphenyloxalsäurediamid, N-Salicylal-N′-salicyloylhydrazin, N,N′-Bis-(salicyloyl)-hydrazin, N,N′-Bis-(3,5-di-tert.butyl-4-hydroxyphenylpropionyl)-hydrazin, 3-Salicyloylamino-1,2,4-triazol, Bis-(benzyliden)-oxalsäuredihydrazid.
4. Weitere Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4′-biphenylen-diphosphonit, 3,9-Bis-(2,4-di-tert.butylphenoxy)-2,4,8, 10-tetraoxa-3,9-diphosphaspiro[5.5]undecan.
5. Peroxidzerstörende Verbindungen, wie z.B. Ester der β-Thio-dipropionsäure, beispiels-weise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
6.Benzofuranone bzw. Indolinone wie sie z.B. in der WO-A 80/01566 und EP-A 415 887 beschrieben werden.
7. Polyamidstabilisatoren, wie z.B. Kupfersalze in Kombination mit Jodiden und/oder Phosphorverbindungen und Salze des zweiwertigen Mangans.
8. Basische Co-Stabilisatoren, wie z.B. Melamin, Polyvinylpyrrolidon, Dicyandiamid, Tri-allylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.
9. Nukleierungsmittel, wie z.B. 4-tert.Butylbenzoesäure, Adipinsäure, Diphenylessigsäure.
10. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit.
11. Sonstige Zusätze, wie z.B. Weichmacher, Gleitmittel, Emulgatoren, Pigmente, Optische Aufheller, Flammschutzmittel, Antistatika, Treibmittel.

Die nachfolgenden Beispiele erläutern die Erfindung weiter. Angaben in Teilen oder Prozenten beziehen sich, ebenso wie in den Patentansprüchen und der übrigen Beschreibung, auf das Gewicht, sofern nichts anderes angegeben ist.

### Beispiel 1:

### Herstellung von Bis(2,4-di-tert-butyl-6-methylphenyl)-phosphorchloridit

In einem mit Stickstoff inertisierten und mit Thermometer, Tropftrichter, Rückflusskühler und Destillationsaufsatz versehenen Vierhalskolben werden 890,3 g (4 Mol) 2,4-Di-tert-butyl-6-methylphenol, 4,2 g Dimethylformamid und 170,0 g Xylol vorgelegt. Bei einer Temperatur von 50 °C werden innerhalb von 1,5 h 274,9 g (2 Mol) Phosphortrichlorid unter Rühren zugetropft. Die Reaktionsmischung wird auf 130 °C erwärmt und bei dieser Temperatur 1 h am Rückfluss erhitzt. Bei einem Vakuum von 0,15 bar wird das Reaktionsgemisch 1 h bei 120 °C gehalten. Anschliessend wird bei erhöhtem Vakuum das Xylol abdestilliert. Nach dem Brechen des Vakuums mit Stickstoff erhält man 959,5 g (1,9 Mol) der Titelverbindung als unterkühlte, gelb-orange, klare Schmelze.
Reinheit: 98 % (bestimmt mit ³¹P-NMR)
Reinigung: Destillation bei 204 °C/0,0002 bar.

### Beispiel 2:

### Herstellung von Bis(2,4-di-tert-butyl-6-methylphenyl)-methylphosphit

In einem 1500 ml Sulfierkolben mit Thermometer, Rührer und Rückflusskühler werden 300 g (1,36 Mol) 2,4-Di-tert-butyl-6-methylphenol vorgelegt und der Reaktor mit Stickstoff inertisiert. Zum Schmelzen des Phenols wird auf 55 °C erwärmt und zur Schmelze 1,5 g Dimethylformamid zugegeben. Bei gleicher Temperatur werden innerhalb von 1,5 h 102,7 g (0,75 Mol) Phosphortrichlorid zugetropft. Das entstehende Salzsäuregas wird durch eine 30%ige wässrige Natriumhydroxid-Lösung neutralisiert. Nach Ende der Zugabe wird die Reaktionsmischung innerhalb 4 h auf 140 °C erhitzt und eine weitere Stunde bei dieser Temperatur gerührt. Dann wird ein leichtes Vakuum angelegt (0,55 bar) und weitere 4 h bei 130 °C gerührt Danach lässt man die erhaltene klare gelb-orange Schmelze (= Bis(2,4-di-tert-butyl-6-methyl)-phosphorchloridit) in einer Stickstoffatmosphäre auf etwa 80 °C abkühlen und verdünnt mit 500 ml Siedegrenzebenzin (80-100 °C). Nach dem Abkühlen der Lösung auf -5 °C werden innerhalb von 15 min 89,3 g (0,884 Mol) Triethylamin zugegeben. Innerhalb einer Stunde werden nun 32,8 g (1,02 Mol) Methanol zugetropft, wobei die Temperatur auf +5 °C ansteigt und das Triethylaminhydrochlorid ausfällt. Dieses Gemisch wird unter Rühren langsam (ca. 1 h) auf Raumtemperatur erwärmen gelassen. Nach dem Abfiltrieren des Niederschlags und Eindampfen des Filtrats erhält man 328 g Phosphit als gelbes Oel. (Reinheit bestimmt mit "High Pressure Liquid Chromatography" [HPLC]: 94 %). Umkristallisieren des Rohproduktes aus Ethanol ergibt 262 g (77 % d. Theorie) der Titelverbindung in Form eines weissen Pulvers mit einem Schmelzpunkt von 75-78 °C.

| | | |
|---|---|---|
| Elementaranalyse: | P ber.: 6,19 % | gef.: 6,19 % |

### Beispiele 3 - 29:

Die Verbindungen der Beispiele 3 - 29 werden analog zu der Verbindung des Beispiels 2 unter Verwendung des dem Substituenten R¹ entsprechenden Alkohols bzw. Phenols hergestellt. Die Substituenten und analytischen Daten sind in der folgenden Tabelle 1 wiedergegeben.

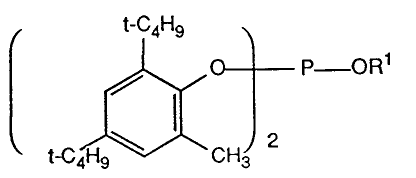

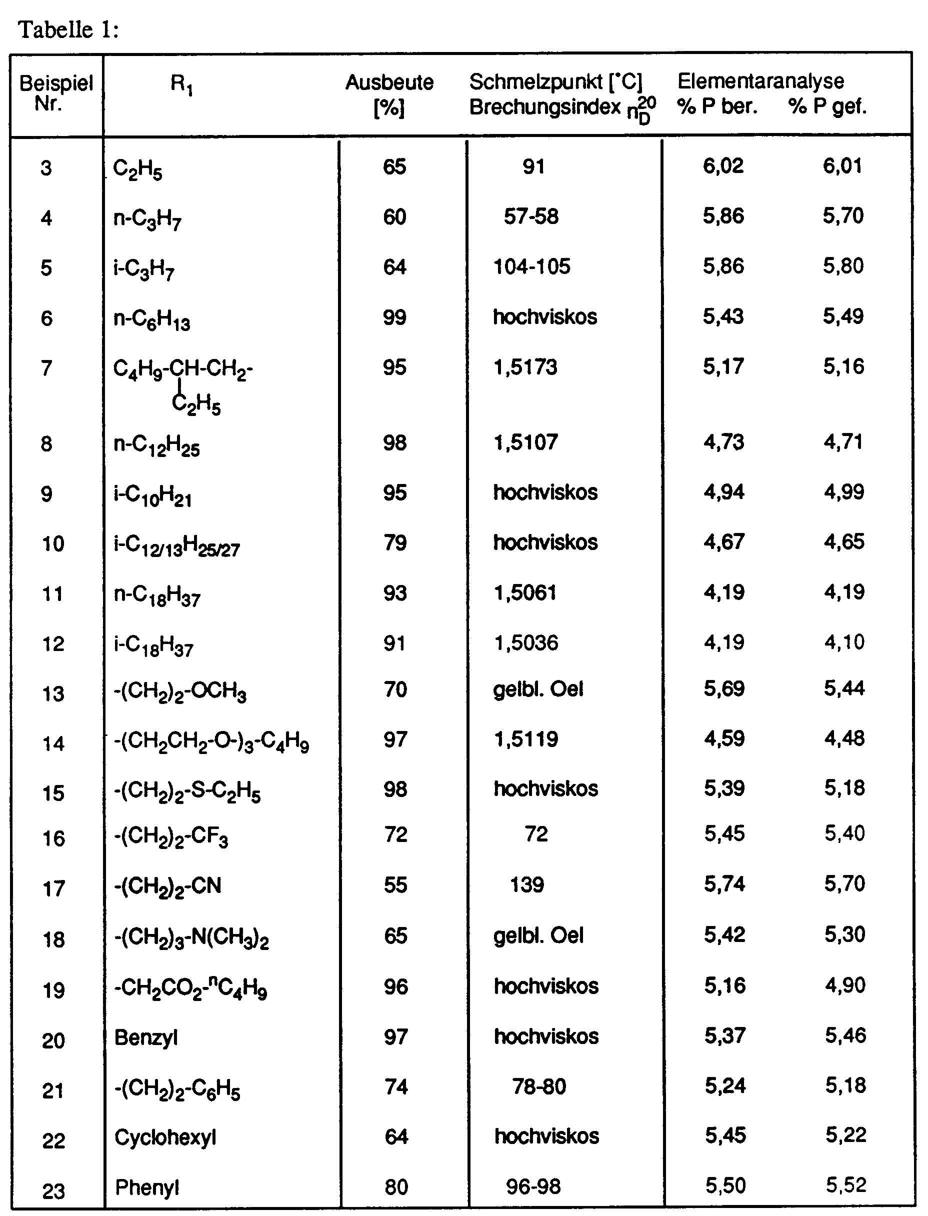

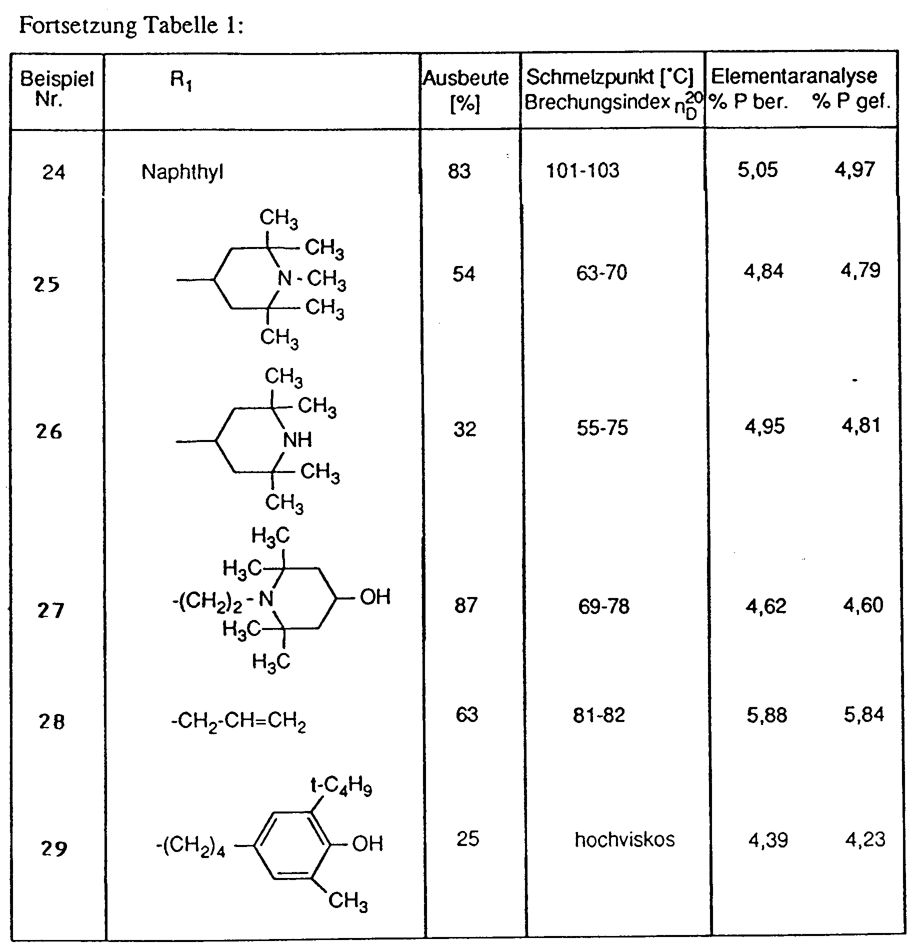

### Beispiel 30: Stabilisierung von Polypropylen

1,3 kg Polypropylenpulver (Schmelzindex 3,2 g/10 min, gemessen bei 230 °C/2,16 kg) werden mit 0,05 % Calciumstearat, 0,05 % Tetrakis[3,5-di-tert-butyl-1,4-hydroxyphenylpropionyloximethyl]methan und 0,05 % des in der Tabelle 2 angegebenen Stabilisators vermischt. Diese Mischung wird in einem Extruder mit einem Zylinderdurchmesser von 20 mm und einer Länge von 400 mm bei 100 Umdrehungen pro Minute extrudiert, wobei die 3 Heizzonen auf 260 °C, 270 °C und 280 °C eingestellt sind. Das Extrudat wird zur Kühlung durch ein Wasserbad gezogen und anschliessend granuliert. Das erhaltene Granulat wird ein zweites und drittes Mal extrudiert. Nach diesen drei Extrusionen wird der Schmelzindex bei 230 °C/2,16 kg gemessen. Kleine Werte bedeuten eine gute Stabilisierung. Die Ergebnisse sind in der Tabelle 2 wiedergegeben.

**Tabelle 2**

| Verbindung aus Beispiel Nr. | Schmelzindex [g/10 min] |
|---|---|
| - | 17,8 |
| 2 | 6,1 |
| 3 | 6,6 |
| 4 | 5,8 |
| 5 | 10,2 |
| 6 | 6,0 |
| 7 | 6,7 |
| 8 | 5,8 |
| 9 | 6,2 |
| 10 | 8,7 |
| 11 | 7,1 |
| 12 | 7,0 |
| 13 | 8,7 |
| 16 | 9,5 |

### Beispiel 31: Stabilisierung von Polyethylen

100 Teile unstabilisiertes Polyethylen hoher Dichte mit einem Molekulargewicht von ca. 500 000 in Pulverform werden mit 0,05 Teilen
Tetrakis[3,5-di-tert-butyl-4-hydroxyphenylpropionyloxymethyl] methan und 0,1 Teilen des in Tabelle 3 angegebenen Stabilisators trocken gemischt.Die Mischungen werden 50 Minuten lang in einem Brabender-Plastographen bei 220 °C und 50 UpM geknetet. Während dieser Zeit wird der Knetwiderstand als Drehmoment kontinuierlich registriert. Infolge der Vernetzung des Polymeren erfolgt im Laufe der Knetzeit nach anfänglicher Konstanz eine rasche Zunahme des Drehmoments. Die Wirksamkeit der Stabilisatoren äussert sich in einer Verlängerung der Zeit bis zum Anstieg des Drehmoments. Die erhaltenen Werte sind der Tabelle 3 zu entnehmen.

**Tabelle 3**

| Verbindung aus Beispiel Nr. | Zeit bis zum Drehmomentanstieg [min] |
|---|---|
| - | 5,0 |
| 2 | 16,5 |
| 3 | 12,0 |
| 4 | 12,0 |
| 5 | 13,0 |
| 6 | 15,0 |
| 7 | 22,5 |
| 8 | 17,0 |
| 9 | 19,0 |
| 10 | 16,5 |
| 11 | 14,0 |
| 12 | 17,0 |
| 13 | 13,5 |
| 16 | 15,0 |

## Patentansprüche

1. Verbindungen der Formel I 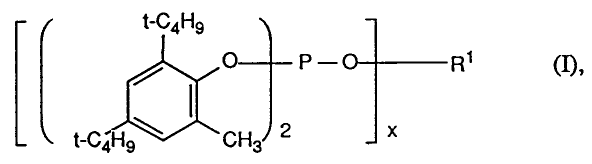 worin x 1 ist,
R¹ für C₁-C₃₀-Alkyl, mit Halogen, -COOR², -CN, -NR³R⁴ oder -CONR³R⁴ substituiertes C₁-C₁₈-Alkyl, durch -NR⁵-, -O- oder -S- unterbrochenes C₂-C₁₈-Alkyl, C₃-C₁₈-Alkenyl, C₅-C₁₂-Cycloalkyl, Phenyl-C₁-C₄-alkyl, Phenyl, Naphthyl, einen Rest der Formel 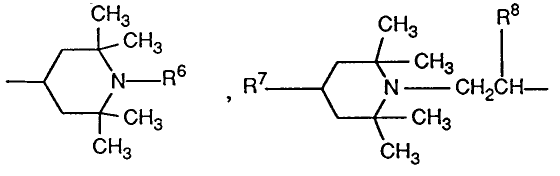 oder 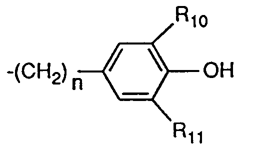 steht,
R₂, R₃, R₄ und R₅ unabhängig voneinander Wasserstoff, C₁-C₁₈-Alkyl, C₅-C₁₂-Cycloalkyl oder Phenyl-C₁-C₄-Alkyl bedeuten,
R⁶ Wasserstoff, Methyl, Allyl oder Benzyl ist,
R⁷ Wasserstoff oder -OR⁹ bedeutet,
R⁸ Wasserstoff oder Methyl ist,
R⁹ für Wasserstoff oder C₁-C₃₀-Alkyl steht,
R¹⁰ und R¹¹unabhängig voneinander Wasserstoff oder C₁-C₈-Alkyl bedeuten und
n für 3-6 steht.

2. Verbindungen der Formel I nach Anspruch 1, worin R¹ für C₁-C₃₀-Alkyl, mit Halogen, -COOR², -CN, -NR³R⁴ oder -CONR³R⁴ substituiertes C₁-C₁₈-Alkyl, durch -NR⁵-, -O- oder -S- unterbrochenes C₂-C₁₈-Alkyl, C₃-C₁₈-Alkenyl, C₅-C₁₂-Cycloalkyl, Phenyl-C₁-C₄-alkyl, Phenyl, Napthyl, einen Rest der Formel 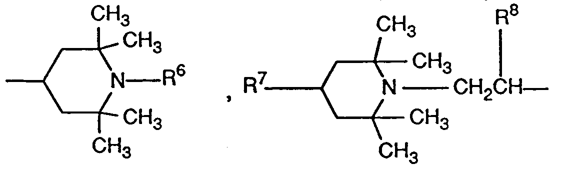 oder 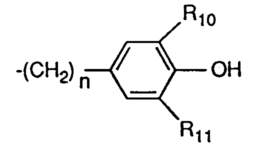 steht.

3. Verbindungen der Formel I nach Anspruch 2, worin, wenn x=1 ist, R¹ für C₁-C₂₄-Alkyl, mit Halogen, -COOR², -CN, -NR³R⁴ oder -CONR³R⁴ substituiertes C₁-C₁₂-Alkyl, durch -NR⁵-, -O- oder -S- unterbrochenes C₂-C₁₈-Alkyl, C₃-C₁₈-Alkenyl, C₅-C₁₂-Cycloalkyl, Phenyl-C₁-C₄-alkyl, Phenyl, Naphthyl, einen Rest der Formel 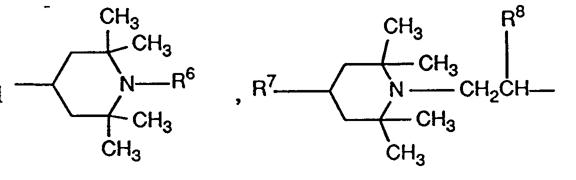 oder 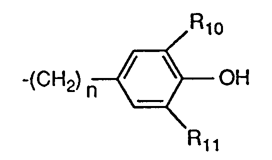 steht.

4. Verbindungen der Formel I nach Anspruch 3, worin R¹ für C₁-C₂₀-Alkyl, mit Halogen, -COOR², -CN oder -NR³R⁴ substituiertes C₁-C₈-Alkyl, durch -O- oder -S-unterbrochenes C₂-C₈-Alkyl, C₃-C₈-Alkenyl, C₅-C₈-Cycloalkyl, Phenyl, Naphthyl, einen Rest der Formel 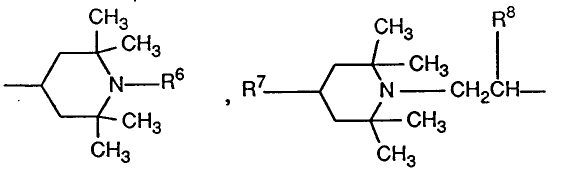 oder 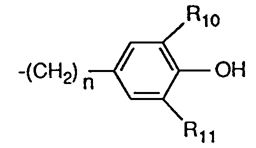 steht,
R⁶ Wasserstoff oder Methyl ist, und
R⁸ und R⁹ Wasserstoff darstellen.

5. Verbindungen der Formel I nach Anspruch 3, worin R¹ unsubstituiertes oder mit Halogen, -COOR², -CN oder -NR³R⁴ substituiertes C₁-C₁₈-Alkyl, durch -NR⁵-, -O- oder -S- unterbrochenes C₂-C₁₈-Alkyl, C₃-C₆-Alkenyl, C₅-C₈-Cycloalkyl, Phenyl-C₁-C₄-alkyl, einen Rest der Formel 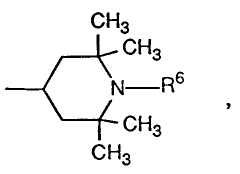 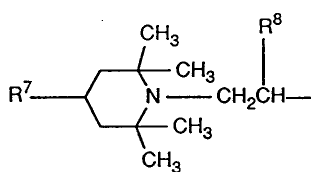 oder 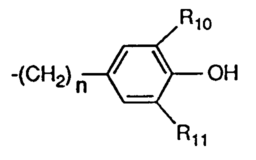 steht.

6. Verbindungen nach Anspruch 5, worin R¹ unsubstituiertes oder mit Halogen, -COOR², -CN oder -NR³R⁴ substituiertes C₁-C₁₂-Alkyl, durch -NR⁵-, -O- oder -S-unterbrochenes C₂-C₁₂-Alkyl, Phenyl-C₁-C₄-alkyl oder C₅-C₇-Cycloalkyl bedeutet.

7. Verbindungen nach Anspruch 1, worin R¹ C₁-C₁₈-Alkyl, C₅-C₇-Cycloalkyl oder Phenyl-C₁-C₄-Alkyl, vor allem C₁-C₁₈-Alkyl bedeutet.

8. Verbindungen nach Anspruch 7, worin R¹ C₁-C₄-Alkyl bedeutet.

9. Zusammensetzungen enthaltend (a) ein gegen oxidativen, thermischen und/oder lichtinduzierten Abbau empfindliches organisches Material und (b) mindestens eine Verbindung der Formel I nach Anspruch 1.

10. Zusammensetzungen nach Anspruch 9 enthaltend als Komponente (a) natürliche, halbsynthetische oder synthetische Polymere.

11. Zusammensetzungen nach Anspruch 10 enthaltend als Komponente (a) thermoplastische Polymere.

12. Zusammensetzungen nach Anspruch 10 enthaltend als Komponente (a) ein Polyolefin.

13. Zusammensetzungen nach Anspruch 10 enthaltend als Komponente (a) ein Polyvinylchlorid, ein Polyethylen oder Polypropylen.

14. Verwendung der Verbindungen der Formel I nach Anspruch 1 zum Stabilisieren gegen oxidativen, thermischen und/oder actinischen Abbau empfindlichen organischen Materials.

15. Verbindung der Formel II

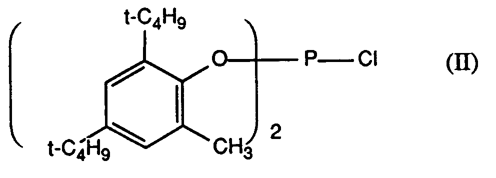

16. Verwendung der Verbindung nach Anspruch 15 zur Herstellung von Verbindungen der Formel I nach Anspruch 1.

## Claims

1. A compound of the formula I 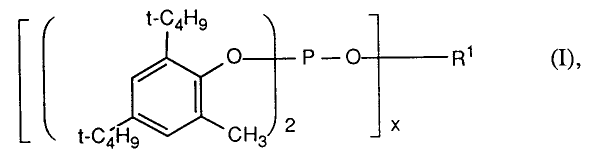 in which x is 1,
R¹ is C₁-C₃₀alkyl, C₁-C₁₈alkyl substituted by halogen, -COOR², -CN, -NR³R⁴ or by -CONR³R⁴, C₂-C₁₈alkyl which is interrupted by -NR⁵-, -O- or -S-, C₃-C₁₈alkenyl, C₅-C₁₂cycloalkyl, phenyl-C₁-C₄-alkyl, phenyl or R¹ is naphthyl, a radical of the formula 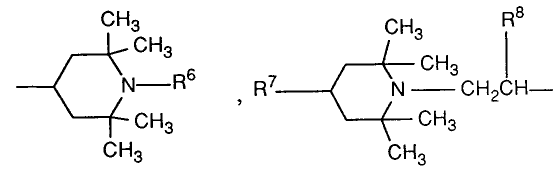 or 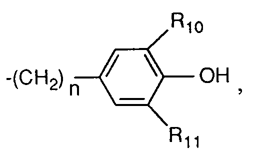
R₂, R₃, R₄ and R₅, independently of one another, are hydrogen, C₁-C₁₈alkyl, C₅-C₁₂cycloalkyl or phenyl-C₁-C₄alkyl, R⁶ is hydrogen, methyl, allyl or benzyl, R⁷ is hydrogen or -OR⁹, R⁸ is hydrogen or methyl, R⁹ is hydrogen or C₁-C₃₀alkyl, R¹⁰ and R¹¹, independently of one another, are hydrogen or C₁-C₈alkyl, and n is 3-6.

2. A compound of the formula I according to claim 1, in which R¹ is C₁-C₃₀alkyl, C₁-C₁₈alkyl substituted by halogen, -COOR², -CN, -NR³R⁴ or by -CONR³R⁴, C₂-C₁₈alkyl which is interrupted by -NR⁵-, -O- or -S-, C₃-C₁₈alkenyl, C₅-C₁₂cycloalkyl, phenyl-C₁-C₄alkyl, phenyl or R¹ is naphthyl, a radical of the formula 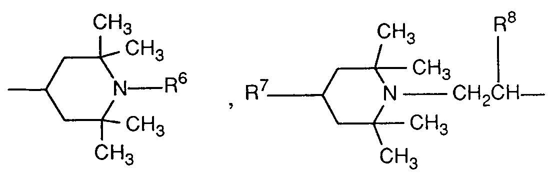 or

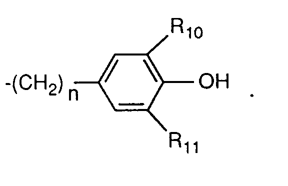

3. A compound of the formula I according to claim 2, in which R¹ is C₁-C₂₄alkyl, C₁-C₁₂alkyl substituted by halogen, -COOR², -CN, -NR³R⁴ or by -CONR³R⁴, C₂-C₁₈alkyl which is interrupted by -NR⁵-, -O- or -S-, C₃-C₁₈alkenyl, C₅-C₁₂cycloalkyl, phenyl-C₁-C₄alkyl, phenyl or R¹ is naphthyl, a radical of the formula 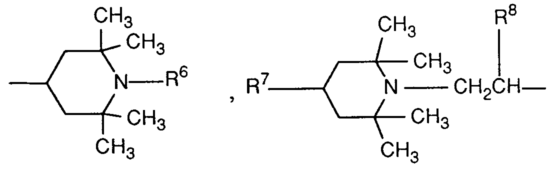 or

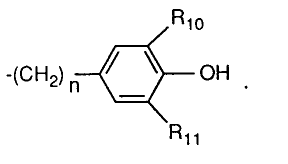

4. A compound of the formula I according to claim 3, in which R¹ is C₁-C₂₀alkyl, C₁-C₈alkyl which is substituted by halogen, -COOR², -CN or -NR³R⁴, C₂-C₈alkyl which is interrupted by -O- or -S-, C₃-C₈alkenyl, C₅-C₈cycloalkyl, phenyl or R¹ is naphthyl, a radical of the formula 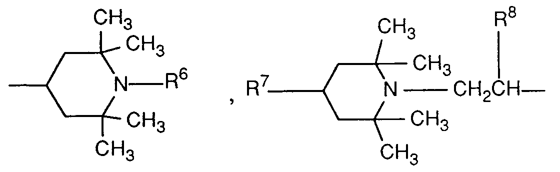 or 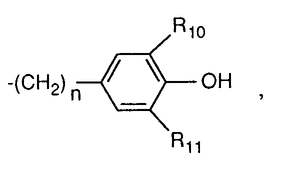
R⁶ is hydrogen or methyl, and R⁸ and R⁹ are hydrogen.

5. A compound of the formula I according to claim 3, in which R¹ is C₁-C₁₈alkyl which is unsubstituted or substituted by halogen, -COOR², -CN or -NR³R⁴, C₂-C₁₈alkyl which is interrupted by -NR⁵-, -O- or -S-, C₃-C₆alkenyl, C₅-C₈cycloalkyl, phenyl-C₁-C₄alkyl, a radical of the formula 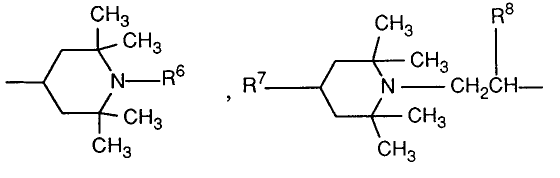 or

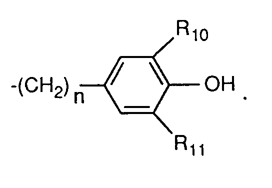

6. A compound according to claim 5, in which R¹ is C₁-C₁₂alkyl which is unsubstituted or substituted by halogen, -COOR², -CN or -NR³R⁴, C₂-C₁₂alkyl which is interrupted by -NR⁵-, -O- or -S-, or is phenyl-C₁-C₄alkyl or C₅-C₇cycloalkyl.

7. A compound according to claim 1, in which R¹ is C₁-C₁₈alkyl, C₅-C₇cycloalkyl or phenyl-C₁-C₄alkyl, in particular C₁-C₁₈alkyl.

8. A compound according to claim 7, in which R¹ is C₁-C₄alkyl.

9. A composition comprising (a) an organic material which is sensitive to oxidative, thermal and/or photoinduced degradation, and (b) at least one compound of the formula I according to claim 1.

10. A composition according to claim 9, in which component (a) is a natural, semisynthetic or synthetic polymer.

11. A composition according to claim 10, in which component (a) is a thermoplastic polymer.

12. A composition according to claim 10, in which component (a) is a polyolefin.

13. A composition according to claim 10, in which component (a) is a polyvinyl chloride, a polyethylene or a polypropylene.

14. The use of a compound of the formula I according to claim 1 for stabilising organic materials which are sensitive to oxidative, thermal and/or actinic degradation.

15. The compound of the formula II

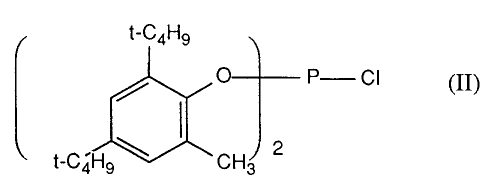

16. The use of the compound according to claim 15 for the preparation of a compound of the formula I according to claim 1.

## Revendications

1. Composés de formule I 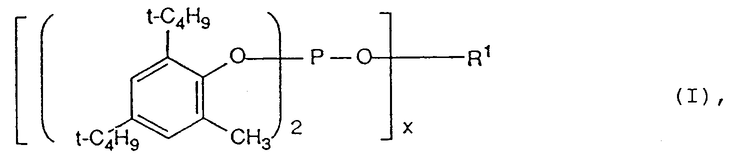 dans laquelle
x vaut 1,
R¹ représente alkyle en C₁-C₃₀, alkyle en C₁-C₁₈ substitué par halogène, -COOR², -CN, -NR³R⁴ ou -CONR³R⁴, représente alkyle en C₂-C₁₈ interrompu par -NR⁵-, -O- ou -S-, alcényle en C₃-C₁₈, cycloalkyle en C₅-C₁₂, phénylalkyle en C₁-C₄, phényle, naphtyle, un radical de formule 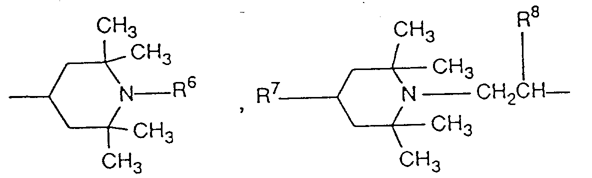 ou 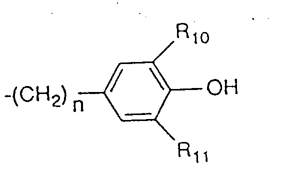
R², R³, R⁴ et R⁵, indépendamment les uns des autres, représentent l'hydrogène, alkyle en C₁-C₁₈, cycloalkyle en C₅-C₁₂ ou phénylalkyle en C₁-C₄,
R⁶ représente l'hydrogène, méthyle, allyle ou benzyle,
R⁷ représente l'hydrogène ou -OR⁹,
R⁸ représente l'hydrogène ou méthyle,
R⁹ représente l'hydrogène ou alkyle en C₁-C₃₀,
R¹⁰ et R¹¹, indépendamment l'un de l'autre, représentent l'hydrogène ou alkyle en C₁-C₈, et
n va de 3 à 6.

2. Composés de formule I, selon la revendication 1, dans lesquels R¹ représente alkyle en C₁-C₃₀, alkyle en C₁-C₁₈ substitué par halogène, -COOR², -CN, -NR³R⁴ ou -CONR³R⁴, alkyle en C₂-C₁₈ interrompu par -NR⁵-, -O- ou -S-, alcényle en C₃-C₁₈, cycloalkyle en C₅-C₁₂, phénylalkyle en C₁-C₄, phényle, naphtyle, un radical de formule 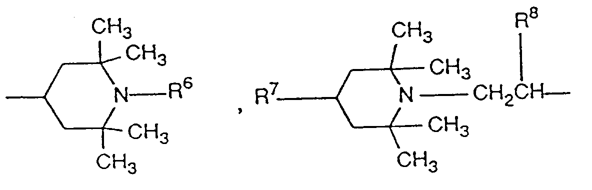 ou

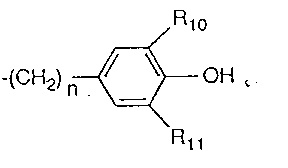

3. Composés de formule I, selon la revendication 2, dans lesquels lorsque x vaut 1, R¹ représente alkyle en C₁-C₂₄, alkyle en C₁-C₁₂ substitué par halogène, -COOR², -CN, -NR³R⁴ ou -CONR³R⁴, alkyle en C₂-C₁₈ interrompu par -NR⁵-, -O- ou -S-, alcényle en C₃-C₁₈, cycloalkyle en C₅-C₁₂, phénylalkyle en C₁-C₄, phényle, naphtyle, un radical de formule 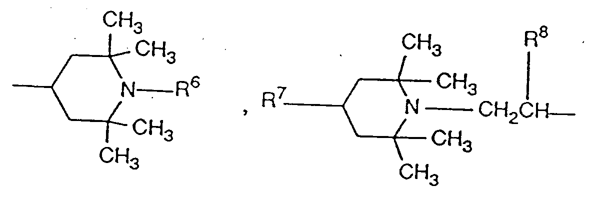 ou

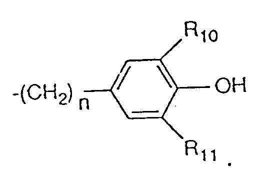

4. Composés de formule I, selon la revendication 3, dans lesquels R¹ représente alkyle en C₁-C₂₀, alkyle en C₁-C₈, substitué par halogène, -COOR², -CN ou -NR³R⁴, alkyle en C₂-C₈ interrompu par -O- ou -S-, alcényle en C₃-C₈, cycloalkyle en C₅-C₈, phényle, naphtyle, un radical de formule 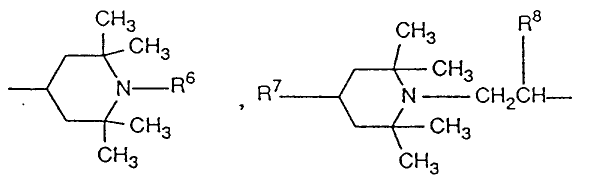 ou 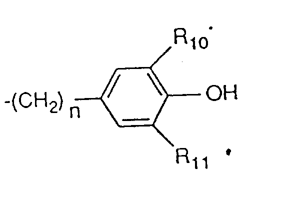
R⁶ représente l'hydrogène ou méthyle, et
R⁸ et R⁹ représentent l'hydrogène.

5. Composés de formule I, selon la revendication 3, dans lesquels R¹ représente alkyle en C₁-C₁₈ non substitué ou substitué par halogène, -COOR², -CN ou -NR³R⁴, alkyle en C₂-C₁₈ interrompu par -NR⁵-, -O- ou -S-, alcényle en C₃-C₆, cycloalkyle en C₅-C₈, phénylalkyle en C₁-C₄, un radical de formule 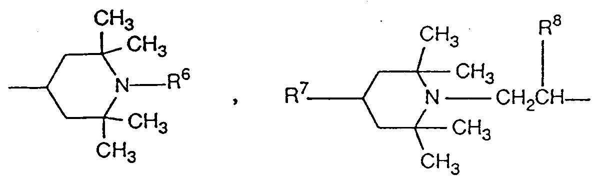 ou

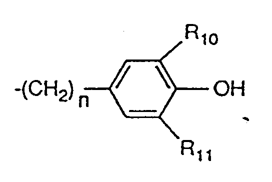

6. Composés selon la revendication 5, dans lesquels R¹ représente alkyle en C₁-C₁₂ non substitué ou substitué par halogène, -COOR², -CN ou -NR³R⁴, alkyle en C₂-C₁₂ interrompu par -NR⁵-, -O- ou -S-, phénylalkyle en C₁-C₄ ou cycloalkyle en C₅-C₇.

7. Composés selon la revendication 1, où R¹ représente alkyle en C₁-C₁₈, cycloalkyle en C₅-C₇ ou phénylalkyle en C₁-C₄, avant tout alkyle en C₁-C₁₈.

8. Composés selon la revendication 7, où R¹ représente alkyle en C₁-C₄.

9. Compositions contenant (a) une matière organique sensible à la dégradation induite par oxydation, par la chaleur et/ou par la lumière et (b) au moins un composé de formule I selon la revendication 1.

10. Compositions selon la revendication 9 contenant en tant que composant (a) des polymères naturels, semi-synthétiques ou synthétiques.

11. Compositions selon la revendication 10 contenant en tant que composant (a) des polymères thermoplastiques.

12. Compositions selon la revendication 10 contenant en tant que composants (a) une polyoléfine.

13. Compositions selon la revendication 10 contenant en tant que composant (a) un poly(chlorure de vinyle), un polyéthylène ou un polypropylène.

14. Utilisation des composés de formule I selon la revendication 1 pour la stabilisation de matières organiques sensibles à la dégradation induite par oxydation, par la chaleur et/ou par la lumière actinique.

15. Composé de formule II

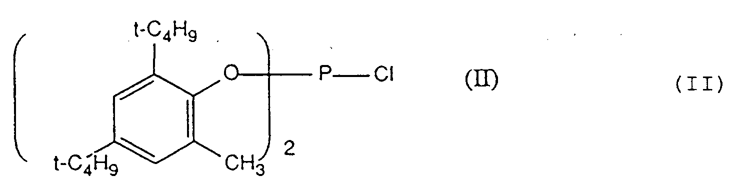

16. Utilisation du composé selon la revendication 15 pour la préparation de composés de formule I selon la revendication 1.
